# FASCICULE DE BREVET EUROPEEN

(11) **EP 1 361 126 B1**
(45) Date de publication et mention de la délivrance du brevet: **04.10.2006**
(21) Numéro de dépôt: 03009595.4
(22) Date de dépôt: 29.04.2003
(51) Int. Cl.: B60T 13/569

(54) **Servomoteur d'assistance pneumatique au freinage comportant un dispositif d'assistance au freinage d'urgence à niveau de bruit de fonctionnement réduit**
Pneumatisches Bremskraftverstärker, mit geräuschdämpfende Notbremsvorrichtung
Pneumatic brake servo comprising a noise reducing emergency braking assisting device

(30) Priorité: 07.05.2002 FR 0205766
(43) Date de publication de la demande: 12.11.2003
(73) Titulaire: BOSCH SISTEMAS DE FRENADO, S.L., 08080 Barcelona 6 (ES)
(72) Inventeur: Simon Bacardit, Juan, 08013 Barcelona (ES); Berthomieu, Bruno, 08003 Barcelona (ES); Sacristan, Fernando, 08348 Cabrils Barcelona (ES)
(74) Mandataire: Hurwic, Aleksander Wiktor

(56) Documents cités:
- US-A- 4 951 550
- US-A- 4 953 446
- US-A- 5 626 069

## Description

La présente invention se rapporte principalement à un servomoteur d'assistance pneumatique au freinage comportant un dispositif d'assistance au freinage d'urgence à niveau de bruit de fonctionnement réduit.

US-A-4 951 550 décrit un servomoteur pneumatique d'assistance au freinage comportant un plongeur prenant appui sur un disque de réaction, ledit plongeur étant chevauché par une clé munie d'élément élastomère.

Un servomoteur de type connu comporte une enveloppe formée par deux coquilles définissant un volume intérieur étanche dans lequel est montée à coulissement étanche une jupe divisant le volume intérieur en une chambre à basse pression et une chambre à pression variable, la jupe reçoit dans sa partie centrale un piston pneumatique se déplaçant ave la jupe, le piston étant muni d'une valve trois voies actionnée par un tige d'actionnement reliée à une pédale de frein. La valve trois voies met en communication au repos la chambre à basse pression et la chambre à pression variable, et lors d'un action sur la pédale de frein isole la chambre à basse pression et alimente à la chambre à pression variable avec un fluide pneumatique à haute pression, par exemple de l'air à pression atmosphérique.

Le servomoteur comporte également un dispositif d'assistance au freinage d'urgence décrit dans la demande de brevet non publiée FR01/07017 déposée le 25 mai 2001 publiée comme WO 02102634 A2 permettant une augmentation du saut du servomoteur lors d'une phase de freinage d'urgence. Le dispositif est disposé au niveau de la valve trois voies comportant un distributeur plongeur composite susceptible de venir en contact avec un disque de réaction transmettant la réaction d'un circuit hydraulique de freinage assisté par le servomoteur au conducteur par l'intermédiaire de la tige d'actionnement et de la pédale de frein.
Le distributeur plongeur comporte un premier élément central portant un premier siège de clapet de la valve trois voies, isolant au repos la chambre à pression variable de l'environnement à haute pression. Le distributeur comporte également un second élément, par exemple une douille entourant le premier élément, la douille comporte sur sa périphérie extérieure des premiers moyens d'indexation de ladite douille relativement au corps du piston pneumatique, par exemple une gorge, et susceptibles de coopérer avec des seconds moyens d'indexation de la douille relativement au corps du piston pneumatique formés par exemple par une clé et verrouillant le douille en position avancée relativement au premier élément central et augmentant ainsi le saut du servomoteur.
Au repos, la clé est en appui contre l'enveloppe du servomoteur par une extrémité inférieure, lors d'un déplacement rapide du distributeur relativement au piston pneumatique, la douille se déplace par rapport à la clé permettant un verrouillage de la clé sur celle-ci, or lors du verrouillage de la clé sur la douille, l'extrémité inférieure de la clé vient frapper le corps du piston pneumatique provoquant un bruit de fonctionnement pouvant nuire au confort de conduite du conducteur qui peut éventuellement croire à un mauvais fonctionnement du système de freinage du véhicule automobile.

C'est par conséquent un but de la présente invention d'offrir un servomoteur d'assistance au freinage équipé d'un dispositif d'assistance au freinage dont le fonctionnement est silencieux.

Ce but est atteint par un servomoteur comportant une valve trois voies disposée dans un piston pneumatique solidaire d'une jupe susceptible de se déplacer sous une différence de pression et commandée par la valve trois voies, le servomoteur selon la présente invention comporte également un dispositif d'assistance au freinage comportant un moyen amortisseur du bruit de contact entre une clé du dispositif d'assistance au freinage et le piston pneumatique.

En d'autres termes, l'extrémité inférieure de la clé susceptible de venir en contact avec le piston pneumatique comporte un élément se déformant élastiquement lorsqu'ils vient en contact avec le piston pneumatique.

La présente invention a principalement pour objet un servomoteur pneumatique d'assistance au freinage comportant une enveloppe dans laquelle est montée à coulissement étanche une jupe définissant une chambre à basse pression et une chambre à pression variable, une valves trois voies commandée par une tige d'actionnement et mettant en communication les deux chambres au repos et isolant les deux chambres en phase de freinage et mettant en communication la chambre à pression variable avec une source de fluide pneumatique à haute pression, ladite valve trois voies étant disposée dans un piston pneumatique solidaire de la jupe, le servomoteur comporte également un dispositif d'assistance au freinage d'urgence comportant une douille d'axe longitudinale montée à coulissement autour d'un distributeur de la valve trois et une clé d'indexation axiale de la douille relativement au piston pneumatique, ladite clé étant montée dans une lumière pratiquée dans le piston pneumatique sensiblement perpendiculairement à l'axe du servomoteur, ladite douille comportant un moyen de butée susceptible de coopérer avec une première extrémité de la clé pour une vitesse de déplacement du distributeur supérieure à une vitesse d'activation prédéterminée, la clé étant au repos en appui contre l'enveloppe du distributeur par une seconde extrémité, caractérisé en ce que la clé comporte un moyen d'amortissement du contact entre la clé et le piston pneumatique lors d'une activation du dispositif de freinage.

La présente invention a également pour objet un servomoteur caractérisé en ce que le moyen d'amortissement comporte un élément déformable de manière élastique orientée vers la tige d'actionnement et susceptible de venir en contact avec une extrémité de la lumière du piston pneumatique.

La présente invention a également pour objet un servomoteur caractérisé en ce que ledit élément déformable de manière élastique est muni d'au moins une languette orientée en direction de l'extrémité de la lumière.

La présente invention a également pour objet un servomoteur, caractérisé en ce que le moyen d'amortissement est monté emmanché dans un orifice pratiqué dans le corps de clé entre l'orifice de passage de la douille et la butée d'appui .

La présente invention a également pour objet un servomoteur caractérisé en ce que le moyen d'amortissement comporte un corps sensiblement cylindrique muni à une première extrémité d'une tête de diamètre extérieur supérieur au diamètre de l'orifice, la tête du moyen d'amortissement étant opposée relativement au corps de la clé à une seconde extrémité comportant l'élément déformable de manière élastique.

La présente invention a également pour objet un servomoteur caractérisé en ce que l'élément déformable de manière élastique est muni de deux languettes radialement opposées.

La présente invention a également pour objet un servomoteur caractérisé en ce que le moyen d'amortissement est réalisé en élastomère, avantageusement en caoutchouc.

La présente invention a également pour objet un servomoteur caractérisé en ce que ledit moyen d'amortissement est surmoulé sur la seconde extrémité de la clé venant en appui au repos contre l'enveloppe du servomoteur.

La présente invention a également pour objet un servomoteur caractérisé en ce que le moyen d'amortissement comporte deux languettes sensiblement parallèles.

La présente invention a également pour objet un servomoteur caractérisé en ce que la seconde extrémité de la clé et le moyen d'amortissement sont réalisés en matériau plastique.

La présente invention a pour avantage d'être de conception simple et de ne pas nécessiter de modifications fonctionnelles du servomoteur.

La présente invention sera mieux comprise à l'aide de la description qui va suivre des figures annexées pour lesquelles l'avant, l'arrière, le haut et le bas correspondent respectivement à la gauche, à la droite, à la partie supérieure et à la partie inférieure des dessins et sur lesquelles :
La figure 1 est une vue en coupe longitudinale d'un premier exemple d'un servomoteur d'assistance pneumatique au freinage selon la présente invention ;
Les figures 2a, 2b sont des vues de détail de la figure 1 dans deux positions différentes ;
La figure 3 est une vue de trois quart d'un élément d'un servomoteur de la figure 1 ;
Les figures 4a, 4b sont des vues en coupe longitudinale d'un second exemple de réalisation d'un servomoteur selon la présente invention dans deux positions de fonctionnement différentes.

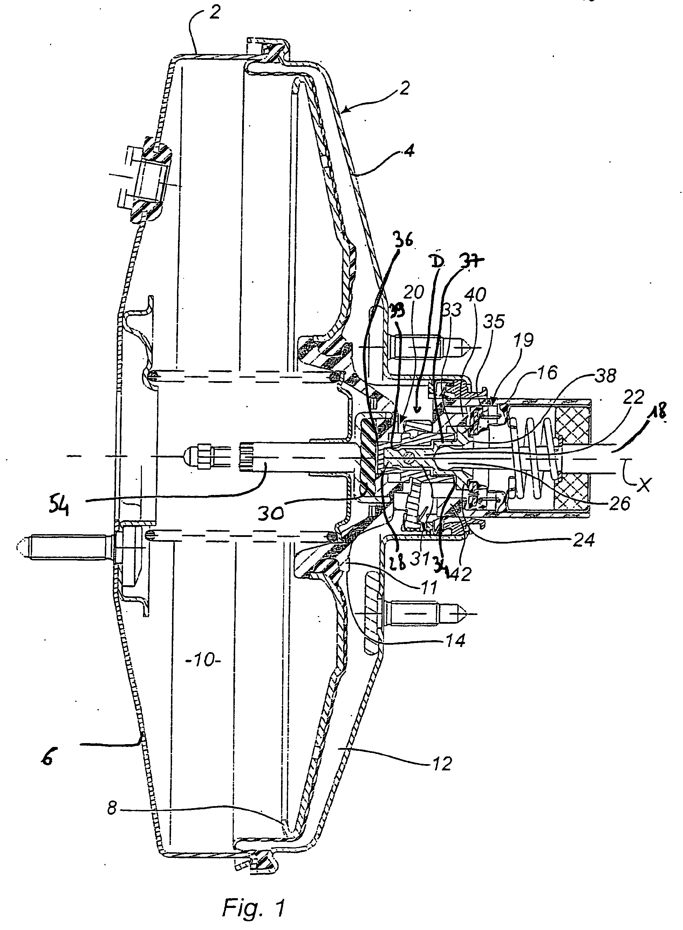

Sur la figure 1, on peut voir un servomoteur de type connu d'axe longitudinale X comportant une enveloppe 2 formée par une première coquille 4 et une seconde coquille 6 et dans laquelle est montée à coulissement étanche un jupe 8 divisant le volume intérieur définit par l'enveloppe 2 en une première chambre 10 à basse pression et une seconde chambre 12 à pression variable.

La jupe 8 comporte dans sa partie centrale un piston pneumatique 11 monté de manière étanche sur la jupe par son extrémité radialement externe 14 orientée vers l'avant et s'étendant longitudinalement vers l'arrière par un manchon 16 comportant une valve trois voies 19 actionnée par une tige d'actionnement 18 reliée à une pédale de frein (non représentée).

La valve trois voies 19 est munie d'un distributeur plongeur 20 d'axe X comportant un palpeur central 22 muni d'une première extrémité longitudinale arrière 24 reliée à une extrémité avant de la tige d'actionnement par un liaison rotulante 26 et d'une seconde extrémité longitudinale 28 avant opposée à la première extrémité longitudinale 24.

Le palpeur 22 comporte à sa première extrémité longitudinale arrière 24 une embase 35, reliée d'axe X, et raccordée à une partie de plus petit diamètre 31 d'axe X par un épaulement 33 orienté vers l'avant d'axe X.

La valve trois voies comporte également un premier et un second sièges de clapet 38, 40 portés respectivement par l'extrémité longitudinale arrière 24 du plongeur 22 et par un épaulement 42 pratiqué sur la périphérie intérieure du manchon 16 du piston pneumatique 11.
Le premier siège de clapet 38 est formé par un bourrelet annulaire en saillie sur une face annulaire arrière de l'extrémité arrière 24 du plongeur 22 et le second siège de clapet 40 est formé par un bourrelet annulaire en saillie sur l'épaulement 42.

La structure d'une valve trois voies étant connue, nous ne la décrirons pas plus en détail.

Le distributeur plongeur comporte également une douille 32 coaxial à l'axe X formant une partie d'un dispositif d'assistance au freinage d'urgence D et entourant le plongeur 20 et venant en appui par une extrémité longitudinale arrière 34 sur l'embase 35 formant l'extrémité longitudinale arrière 24 du plongeur 22 et susceptible de venir en contact par une extrémité longitudinale avant 36 avec le disque de réaction 30.

La douille 32 de type connu est percé d'un alésage comportant sur sa périphérie intérieure une première partie 37 de plus grand diamètre raccordée à une seconde partie de plus petit diamètre 39 par un épaulement 41 orienté vers l'arrière et entourant respectivement une partie de plus grand diamètre, la partie de plus petit diamètre 31 et l'épaulement 33 du palpeur 22.

La douille 32 comporte également sur sa surface extérieure un moyen de butée, dans l'exemple représenté il s'agit d'une gorge 50 à section avantageusement triangulaire, un premier côté 52 de la gorge 50 orienté vers l'avant est sensiblement perpendiculaire à l'axe X, et un second côté 53 vers l'arrière et formant un angle non droit avec l'axe X.

Il est possible cependant d'envisager un moyen de butée rapporté sur le corps de la douille en saillie de la périphérie extérieure de la douille.

L'effort de freinage fournie par le conducteur par l'intermédiaire du palpeur 22 et l'assistance fournie par le servomoteur par l'intermédiaire du piston pneumatique 11 sont transmises à un maître-cylindre (non représenté) au moyen d'une tige de poussée 54 et du disque de réaction 30 en matériau sensiblement incompressible disposé dans un logement fixé à une première extrémité longitudinalement arrière de la tige de poussée 54, la seconde extrémité longitudinale de la tige de poussée 54 coopérant avec un piston du maître-cylindre (non représenté).

Le dispositif d'assistance au freinage d'urgence comporte également une clé 58 d'indexation longitudinale de la douille 32 relativement au piston pneumatique 11. La clé d'axe longitudinal Z est montée dans le corps du piston pneumatique 11 à l'intérieur d'une lumière 60 sensiblement perpendiculaire à l'axe X et de manière basculante autour d'un axe Y perpendiculaire à l'axe X et compris dans un plan médian P orthogonal à la feuille de dessin . La clé comporte un corps de clé 67 percé d'un orifice centrale 59 et muni à une première extrémité longitudinale supérieure 68 d'une tête 62 sensiblement perpendiculaire au corps de clé et susceptible de coopérer avec la gorge 50 de la douille 32 et à une seconde extrémité longitudinale 70 inférieure d'une patte 72 orientée vers l'arrière formant butée sensiblement perpendiculaire au corps de clé en appui au repos contre le corps du servomoteur et permettant le déverrouillage du dispositif d'assistance au freinage d'urgence à la fin d'une phase de freinage.

La patte 72 est formée par un élément en matériau plastique surmoulé sur l'extrémité inférieure de la clé.

Lors de l'activation du dispositif d'assistance au freinage d'urgence, la clé vient en contact avec le corps de piston 11, en particulier avec une extrémité arrière 61 de la lumière 60.

Un moyen élastique 71, par exemple un ressort cylindrique est monté en compression dans la lumière 60 sensiblement parallèlement à l'axe X en compression entre le corps du piston pneumatique 11 et le corps de la clé 58.

Une goupille 51 est montée traversante de manière sensiblement perpendiculaire à l'axe X dans le distributeur plongeur, de manière fixe dans le palpeur et de manière flottante dans la douille dans un passage oblong (non représenté).

La clé comporte également un moyen pour réduire le bruit de contact entre la clé et le corps du piston pneumatique disposé dans la partie inférieur de la clé sensiblement à mi-chemin entre l'orifice centrale 59 et la seconde extrémité inférieure 70.

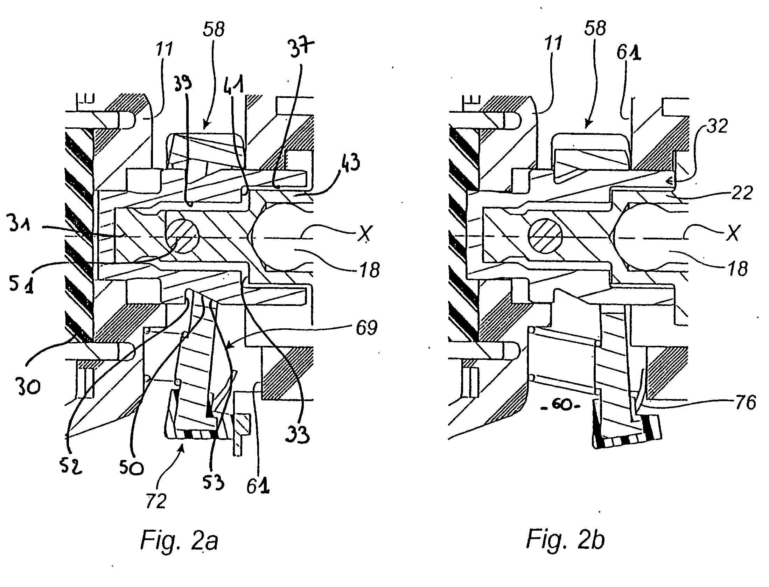

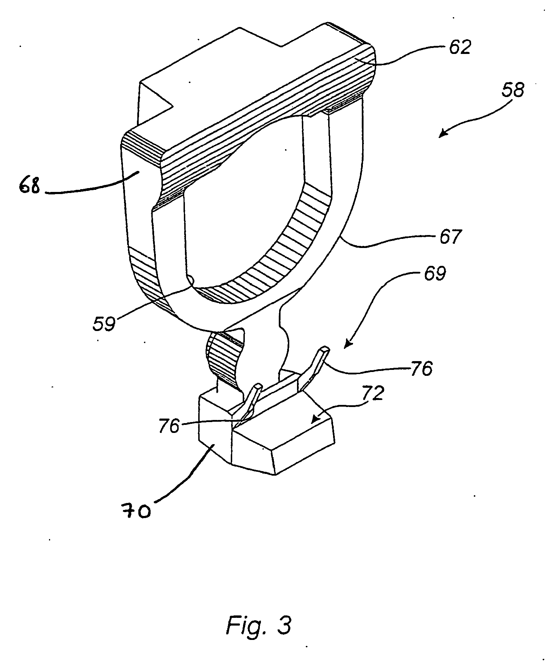

Sur les figures 2a,2b et 3, on peut voir un premier exemple d'une clé selon la présente invention comportant un élément amortissant 76 venu de matière avec la butée d'appui 72 en matériau plastique, par exemple en résine acétyalique ou polyamide, chargée ou on en fibres de verres. L'élément amortissant est muni d'au moins une languette orientée vers l'arrière et formant un angle non nul avec l'axe X du servomoteur.

Dans l'exemple représenté, l'élément 76 comporte avantageusement deux languettes de faible section disposées chacune à une extrémité transversale de la butée 72, se déformant ainsi élastiquement sans fournir de résistance excessive au déplacement de la clé en direction du piston pneumatique.

Ce mode de réalisation a pour avantage de ne pas nécessiter l'ajout de pièces supplémentaires.

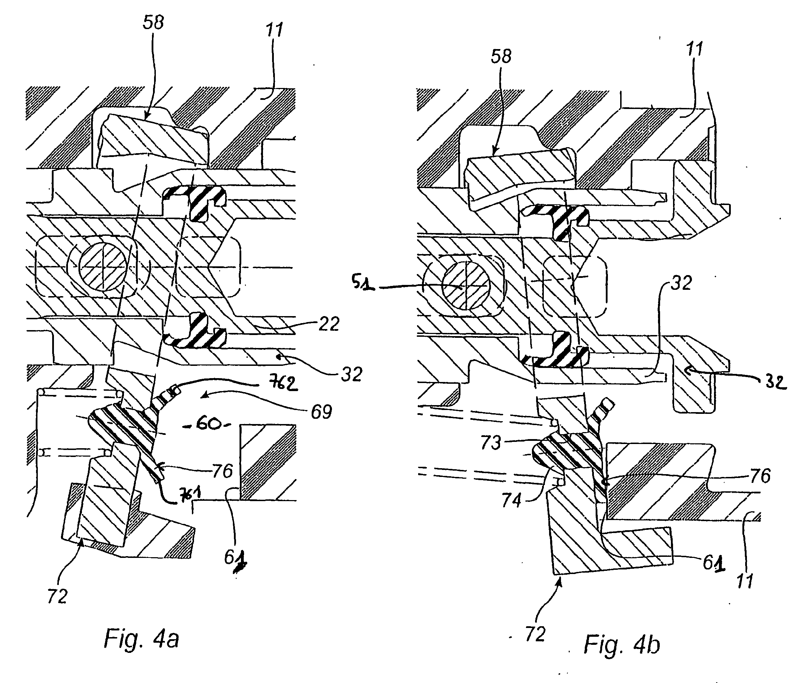

Sur les figures 4a, 4b, on peut voir la clé 58 en détail comportant un second exemple de réalisation du moyen d'amortissement sonore fixé par exemple à force dans un orifice 73 pratiqué dans le corps de la clé 58 perpendiculairement à l'axe Z de la clé. Le moyen 69 comporte un corps centrale de forme sensiblement cylindrique muni à une première extrémité d'une tête 74 de diamètre extérieure supérieur au diamètre de l'orifice 73 et à une seconde extrémité d'élément vs élastiquement déformables 76 s'épanouissant radialement vers l'extérieur orientées vers l'extrémité arrière 61 de la lumière 60 et de dimension transversale supérieure au diamètre de l'orifice 73.

Le moyen d'amortissement est réalisé en matériau élastiquement déformable, par exemple en élastomère, avantageusement en caoutchouc

Le moyen d'amortissement est alors rendu solidaire de clé par pénétration à force l'élément 69 dans l'orifice 59 de manière à disposer la tête 74 à l'avant du corps de la clé et l'élément amortissant 76 à l'arrière du corps de clé.

L'élément 76 est dans l'exemple représenté, formé par deux languettes 761,762 dont une languette 761 est susceptible de venir en contact avec le corps du piston et d'amortir le contact entre la clé et la corps du piston 11 par déformation élastique de ladite languette 761.

Il est cependant envisageable de prévoir un nombre supérieur de languettes permettant avantageusement d'éviter l'orientation des languettes lors de la fabrication du servomoteur.

Le nombre de languettes dépend bien entendu également de l'amortissement souhaité.

Il est également envisageable de prévoir un élément 76 de forme sensiblement conique dont la partie inférieure viendrait lors de l'activation du dispositif d'assistance au freinage en contact avec le piston 11.

Nous allons maintenant expliquer le fonctionnement du servomoteur et en particulier du dispositif d'assistance au freinage d'urgence.

En phase de freinage normal, le conducteur déplace la tige d'actionnement 18 par appui sur une pédale de frein à une vitesse inférieure à une vitesse seuil V, déplaçant en direction du disque de réaction 30 le distributeur plongeur 20 formé du palpeur 22 et la douille 32. Il y a alors fermeture de la communication entre la chambre à basse pression 10 et la chambre à pression variable 12 et alimentation en air à pression atmosphérique de la chambre à pression variable 12. La différence des pressions entre les deux chambres 10,12 provoque le déplacement du piston pneumatique et le début de l'assistance au freinage. Dans cette configuration, la clé 58 ne se verrouille pas sur la douille 32.

A la fin du freinage, c'est-à-dire lors du recul de la tige d'actionnement 18, l'alimentation de la chambre à pression variable 12 en air pression atmosphérique est interrompu et la communication entres les deux chambres 10,12 est à nouveau ouverte permettant le recul de piston.

En phase de freinage d'urgence, c'est-à-dire lorsque la vitesse du distributeur plongeur dépasse la vitesse seuil V, la douille se déplace relativement au piston d'une amplitude suffisante pour que la tête 62 de la clé 58 pénètre la gorge 50 et verrouille la douille en position avancée dans le disque de réaction 30.

Le piston du fait de la différence de pression entre les chambres avant et arrières se déplace de manière à rattraper le distributeur et en particulier la clé solidaire de la douille, l'extrémité inférieure de la clé vient alors en contact de l'extrémité arrière 61 de la lumière 60 pratiquée dans le piston pneumatique 11 par l'intermédiaire de l'élément amortissant 76 qui se déforme élastiquement et amortit le choc de contact entre la clé et le piston et réduit ainsi le bruit de fonctionnement du servomoteur en phase de freinage d'urgence.

Si le conducteur relâche en partie son effort sur la pédale, comme cela a été constaté dans la plupart des freinages d'urgence, le palpeur 22 recul cependant la douille reste appliquée sur le disque de réaction 30 et poursuit l'effort de freinage.

A la fin du freinage, le palpeur recul suffisamment pour ouvrir à nouveau la communication entre les deux chambres 10,12 provoquant le recul du piston 11, la clé 58 et la douille 32 reculent, la clé 58 au moyen de la patte 64 vient en appui contre le corps du servomoteur provoquant le déverrouillage de la clé 58 sur la douille 32. La douille 32 retrouve sa position de repos en appui sur l'embase 35 ,du palpeur au moyen de la goupille 51.

On a bien réalisé un servomoteur d'assistance pneumatique au freinage comportant un dispositif d'assistance au freinage d'urgence à niveau de bruit de fonctionnement réduit.

La présente invention s'applique notamment à l'industrie automobile.

La présente invention s'applique notamment à l'industrie du freinage pour véhicule automobile et notamment à l'industrie du freinage pour voiture particulière.

## Revendications

1. Servomoteur pneumatique d'assistance au freinage comportant une enveloppe (2) d'axe longitudinal (X) dans laquelle est montée à coulissement étanche une jupe (8) définissant une chambre à basse pression (10) et une chambre à pression variable (12), une valves trois voies (19) commandée par une tige d'actionnement (18) et mettant en communication les deux chambres (10,12) au repos et en phase de freinage isolant les deux chambres (10,12) et mettant en communication la chambre à pression variable (12) avec une source de fluide pneumatique à haute pression, ladite valve trois voies (19) étant disposée dans un piston pneumatique (11) solidaire de la jupe (8), le servomoteur comporte également un dispositif d'assistance au freinage d'urgence (D) comportant une douille (32) d'axe longitudinale(X) montée à coulissement autour d'un distributeur (20) de la valve trois voies (19) et une clé (58) d'indexation axiale de la douille (32) relativement au piston pneumatique (11), ladite clé (58) étant montée dans une lumière (60) pratiquée dans le piston pneumatique (11) sensiblement perpendiculairement à l'axe (X) du servomoteur, la douille (32) comportant un moyen de butée (250) susceptible de coopérer avec une première extrémité (68) de la clé (58) pour une vitesse de déplacement du distributeur supérieure à une vitesse d'activation prédéterminée, la clé (58) étant au repos en appui contre l'enveloppe (2) par une seconde extrémité (70) formant butée d'appui (72), **caractérisé en ce que** la clé (58) comporte un moyen d'amortissement du contact entre la clé (58) et le piston pneumatique (11) lors d'une activation du dispositif d'assistance au freinage d'urgence (D).

2. Servomoteur selon la revendication précédente **caractérisé en ce que** le moyen d'amortissement (69) comporte un élément (76) déformable de manière élastique orientée vers la tige d'actionnement (18) et susceptible de venir en contact avec une extrémité (61) de la lumière (60) du piston pneumatique.

3. Servomoteur selon la revendication précédente **caractérisé en ce que** ledit élément (76) déformable de manière élastique est muni d'au moins une languette orientée en direction de l'extrémité (61) de la lumière (60).

4. Servomoteur selon la revendication 1, 2 ou 3 **caractérisé en ce que** le moyen d'amortissement (76) est monté emmanché dans un orifice (73) pratiqué dans le corps de clé entre l'orifice de passage de la douille et la butée d'appui (64).

5. Servomoteur selon la revendication précédente **caractérisé en ce que** le moyen d'amortissement comporte un corps sensiblement cylindrique muni à une première extrémité d'une tête (74) de diamètre extérieur supérieur au diamètre de l'orifice (73), la tête (74) du moyen d'amortissement (76) étant opposée relativement au corps de la clé (58)à une seconde extrémité comportant l'élément (76) déformable de manière élastique.

6. Servomoteur selon l'une quelconque des revendications de 3 à 5 **caractérisé en ce que** l'élément (76) déformable de manière élastique est muni de deux languettes radialement opposées.

7. Servomoteur selon l'une quelconque des revendications de 3 à 5 **caractérisé en ce que** le moyen d'amortissement est réalisé en élastomère, avantageusement en caoutchouc.

8. Servomoteur selon la revendication 1,2 ou 3 **caractérisé en ce que** ledit moyen d'amortissement (76) est surmoulé sur la seconde extrémité de la clé venant en appui au repos contre l'enveloppe du servomoteur.

9. Servomoteur selon l'ensemble des revendications 3 et 8 **caractérisé en ce que** le moyen d'amortissement (76) comporte deux languettes sensiblement parallèles.

10. Servomoteur selon la revendication précédente **caractérisé en ce que** la seconde extrémité (72) de la clé (58) et le moyen d'amortissement (76) sont réalisés en matériau plastique.

## Claims

1. Pneumatic servomotor for an assisted braking, comprising a casing (2) having a longitudinal axis (X) and in which a skirt (8), mounted for an airtight sliding motion, defines a low-pressure chamber (10) and a variable-pressure chamber (12) ; a three-way valve (19), controlled by an actuating rod (18) and interconnecting the chambers (10, 12) at rest, while separating the chambers (10, 12) on a braking operation and connecting the variable-pressure chamber (12) to a high-pressure air source, said three-way valve (19) being disposed inside a pneumatic piston (11) integral with the skirt (8), wherein said servomotor further comprises an emergency-braking assistance device (D), comprising a sleeve (32) having the longitudinal axis (X) and slidably fitted about a distributor plunger (20) of the three-way valve (19), and a key (58) for the axial indexing of the sleeve (32) relative to the pneumatic piston (11), said key (58) being fitted in an opening (60) provided in the pneumatic piston (11), substantially perpendicularly to the axis (X) of the servomotor, said sleeve (32) comprising a stop-forming means (50), capable of cooperating with a first end (68) of the key (58) when the travel speed of the distributor is higher than a predetermined actuation speed whereas, at rest, a second end (70) of the key (58), constituting a bearing stop (72), bears on the inner wall of the casing (2), **characterised in that** the key (58) comprises an absorber means for the contact noise between the key (58) and the pneumatic piston (11) when the emergency-braking assistance device (D) is actuated.

2. Servomotor according to claim 1, **characterised in that** the absorber means (69) comprises an elastically-deformable element (76) facing towards the actuating rod (18), and capable of contacting an end (61) of the opening (60) provided in the pneumatic piston.

3. Servomotor according to the preceding claim, **characterised in that** said elastically-deformable element (76) is fitted with at least one lug facing towards the end (61) of the opening (60).

4. Servomotor according to claim 1, 2 or 3, **characterised in that** said absorber means (69) is force fitted in a hole (73) provided in the body of the key, between the passage hole for the sleeve and the bearing stop (64).

5. Servomotor according to the preceding claim, **characterised in that** the absorber means comprises a substantially cylindrical body exhibiting, at the one end, a head (74) the outer diameter of which is greater than the diameter of the hole (73), the head (74) of the absorber means (69) being, relative to the body of the key (58), opposite to a second end comprising the elastically-deformable element (76).

6. Servomotor according to any one of claims 3 to 5, **characterised in that** the elastically-deformable element (76) is fitted with two radially-opposite lugs.

7. Servomotor according to any one of claims 3 to 5, **characterised in that** the absorber means is made of an elastomer, advantageously rubber.

8. Servomotor according to claim 1, 2 or 3, **characterised in that** the damping element (76) is moulded in a single piece with the second end of the key, which bears at rest on the inner wall of the servomotor casing.

9. Servomotor according to claims 3 and 8 when taken together, **characterised in that** the damping element (76) comprises two substantially-parallel lugs.

10. Servomotor according to the preceding claim, **characterised in that** the second end (72) of the key (58) and the damping element (76) are made of a plastic material.

## Patentansprüche

1. Pneumatischer Servomotor zur Bremsunterstützung, der ein Gehäuse (2) mit einer Längsachse (X) aufweist, in dem eine Schürze (8), die eine Niederdruckkammer (10) und eine Kammer (12) mit variablem Druck begrenzt, in dichter Weise gleitend angebracht ist, ein Dreiwegeventil (19), das von einer Betätigungsstange (18) gesteuert wird und in der Ruhephase die beiden Kammern (10, 12) miteinander verbindet und während einer Bremsphase die beiden Kammern (10, 12) trennt und die Kammer (12) mit variablem Druck mit einer pneumatischen Hochdruck-Fluidquelle verbindet, wobei das Dreiwegeventil (19) in einem fest mit der Schürze (8) verbundenen pneumatischen Kolben (11) angeordnet ist, wobei der Servomotor auch eine Vorrichtung (D) zur Unterstützung einer Schnellbremsung aufweist, die eine Hülse (32) mit einer Längsachse (X), die gleitend um einen Verteiler (20) des Dreiwegeventils (19) angebracht ist, und einen Schlüssel (58) zur axialen Positionierung der Hülse (32) in Bezug auf den pneumatischen Kolben (11) aufweist, wobei der Schlüssel (58) in einem Langloch (60) angebracht ist, das im pneumatischen Kolben (11) im Wesentlichen senkrecht zur Achse (X) des Servomotors ausgebildet ist, wobei die Hülse (32) ein Anschlagmittel (250) aufweist, das bei einer Verlagerungsgeschwindigkeit des Verteilers, die höher ist als eine vorbestimmte Aktivierungsgeschwindigkeit, mit einem ersten Ende (68) des Schlüssels (58) zusammenwirken kann, wobei der Schlüssel (58) in der Ruhephase über ein zweites Ende (70), das einen Anlageanschlag (72) bildet, am Gehäuse (2) anliegt, **dadurch gekennzeichnet, dass** der Schlüssel (58) ein Mittel zur Dämpfung des Kontakts zwischen dem Schlüssel (58) und dem pneumatischen Kolben (11) bei einer Aktivierung der Vorrichtung (D) zur Unterstützung der Schnellbremsung aufweist.

2. Servomotor nach dem vorhergehenden Anspruch, **dadurch gekennzeichnet, dass** das Dämpfungsmittel (69) ein elastisch verformbares Element (76) aufweist, das zur Betätigungsstange (18) gerichtet ist und mit einem Ende (61) des Langlochs (60) des pneumatischen Kolbens in Kontakt gelangen kann.

3. Servomotor nach dem vorhergehenden Anspruch, **dadurch gekennzeichnet, dass** das elastisch verformbare Element (76) mit mindestens einer Lasche versehen ist, die zum Ende (61) des Langlochs (60) gerichtet ist.

4. Servomotor nach Anspruch 1, 2 oder 3, **dadurch gekennzeichnet, dass** das Dämpfungsmittel (76) so angebracht ist, dass es in eine Öffnung (73) eingesetzt ist, die im Schlüsselkörper zwischen der Öffnung für den Durchgang der Hülse und dem Anlageanschlag (64) ausgebildet ist.

5. Servomotor nach dem vorhergehenden Anspruch, **dadurch gekennzeichnet, dass** das Dämpfungsmittel einen im Wesentlichen zylindrischen Körper aufweist, der an einem Ende mit einem Kopf (74) versehen ist, dessen Außendurchmesser größer ist als der Durchmesser der Öffnung (73), wobei der Kopf (74) des Dämpfungsmittels (76) in Bezug auf den Körper des Schlüssels (58) zu einem zweiten Ende entgegengesetzt ist, welches das elastisch verformbare Element (76) aufweist.

6. Servomotor nach einem der Ansprüche 3 bis 5, **dadurch gekennzeichnet, dass** das elastisch verformbare Element (76) mit zwei radial entgegengesetzten Laschen versehen ist.

7. Servomotor nach einem der Ansprüche 3 bis 5, **dadurch gekennzeichnet, dass** das Dämpfungsmittel aus Elastomermaterial, vorzugsweise aus Gummi hergestellt ist.

8. Servomotor nach Anspruch 1, 2 oder 3, **dadurch gekennzeichnet, dass** das Dämpfungsmittel (76) auf das zweite Ende des Schlüssels, das in der Ruhephase an das Gehäuse des Servomotors in Anlage gelangt, aufgeformt ist.

9. Servomotor nach den Anspruch 3 und 8, **dadurch gekennzeichnet, dass** das Dämpfungsmittel (76) zwei im Wesentlichen parallele Laschen aufweist.

10. Servomotor nach dem vorhergehenden Anspruch, **dadurch gekennzeichnet, dass** das zweite Ende (72) des Schlüssels (58) und das Dämpfungsmittel (76) aus Kunststoffmaterial hergestellt sind.
